# EUROPÄISCHE PATENTSCHRIFT

(11) **EP 3 906 369 B1**
(45) Veröffentlichungstag und Bekanntmachung des Hinweises auf die Patenterteilung: **05.04.2023**
(21) Anmeldenummer: 20710433.2
(22) Anmeldetag: 26.02.2020
(51) Int. Cl.: E21D 9/10, F01M 5/00, F16H 57/08, F16H 1/46, F16H 57/04

(54) **TEMPERIERVORRICHTUNG FÜR ANTRIEBS- UND/ODER GETRIEBEEINHEITEN WIE TUNNELBOHRER-GETRIEBE**
TEMPERATURE CONTROL DEVICE FOR DRIVE AND/OR TRANSMISSION UNITS SUCH AS TUNNEL BORING GEARS
DISPOSITIF DE CONTRÔLE DE LA TEMPÉRATURE POUR LES UNITÉS D'ENTRAÎNEMENT ET/OU DE TRANSMISSION TELLES QUE LES TUNNELIERS

(30) Priorität: 08.03.2019 DE 202019101298 U; 03.04.2019 DE 202019101918 U
(43) Veröffentlichungstag der Anmeldung: 10.11.2021
(73) Patentinhaber: Liebherr-Components Biberach GmbH, 88400 Biberach an der Riß (DE)
(72) Erfinder: FREUDE, Philipp, 88437 Maselheim (DE); BULLIG, Johannes, 88339 Bad Waldsee (DE)
(74) Vertreter: Thoma, Michael
(86) Internationale Anmeldenummer: PCT/EP2020/055024
(87) Internationale Veröffentlichungsnummer: WO 2020/182469

(56) Entgegenhaltungen:
- WO-A1-2014/069536
- CN-A- 101 285 519
- JP-A- 2011 214 586

## Beschreibung

Die vorliegende Erfindung betrifft allgemein das Kühlen und/oder Beheizen von Antriebs- und/oder Getriebeeinheiten von Baumaschinen und ähnlichen Gerätschaften. Die Erfindung betrifft dabei einerseits die Temperiervorrichtung zum Kühlen und/oder Beheizen einer solchen Antriebs- und/oder Getriebeeinheit mit zumindest einem Wärmetauschermodul, das einen durchströmbaren Flüssigkeitsmantel aufweist. Die Erfindung betrifft andererseits eine Antriebs- und/oder Getriebeeinheit mit zumindest zwei Getriebe- und/oder Antriebsabschnitten, die durch eine solche Temperiereinheit gekühlt und/oder beheizt werden. Die Erfindung betrifft schließlich auch eine Tunnelbohrmaschine, deren Getriebe durch eine solche Temperiervorrichtung gekühlt und/oder beheizt wird.

Temperiervorrichtungen zum Kühlen von Antriebs- und Getriebeeinheiten mit einem Wärmetauschermodul, das einen durchströmbaren Flüssigkeitsmantel aufweist, sind beispielsweise aus den Schriften JP 2011 214586 A, WO 2014/069536 A1 oder CN 101 285 519 A bekannt. Das Dokument JP 2011 214586 A offenbart ebenfalls Turbulenzstege.

Bei Baumaschinen, deren Antriebe über längere Zeit kontinuierlich laufen, kommt es zu starken thermischen Belastung der Getriebe und gegebenenfalls auch der daran angrenzenden Antriebsabschnitte, sodass eine reine Luftkühlung nicht mehr ausreicht, um die Wärmemengen abzutransportieren. Es ist daher üblich, die Antriebsmotoren und -getriebe mit Wasser, Öl oder einer anderen Kühlflüssigkeit zu kühlen. Eine solche Flüssigkühlung wird dabei in verschiedenen Ausbildungen praktiziert. Beispielsweise wurde vorgeschlagen, das Getriebe über die Stirnseite, mit der das Getriebe an den Antriebsmotor angeschlossen wird, zu kühlen, indem im Motorflansch zur Kühlung ein Wasserdurchfluss integriert ist, sodass über die an den Motor angeschlossene Stirnseite des Getriebes Getriebewärme abgeführt werden kann. Dies ist an sich für kürzere oder einstufige Getriebe ausreichend, während bei axial längeren Bauformen mit mehreren Getriebestufen, wie sie beispielsweise bei Tunnelbohrmaschinen üblich sind, eine solche stirnseitige Kühlung des Getriebes nicht ausreichend Wärme abführt und insbesondere weiter von der Stirnseite axial beabstandet angeordnete Getriebestufen überhitzen.

Um speziell das Getriebe umfassend zu kühlen, wurde auch bereits vorgeschlagen, das Getriebeöl in einem Kreislauf aus dem Getriebe zu leiten, extern zu kühlen und wieder rückzuspeisen. Ein solches Umwälzen des Getriebeöls mit externer Kühlung ist jedoch recht aufwändig und unterliegt mehreren Randbedingungen hinsichtlich Umwälzgeschwindigkeit und Druck, um ein ausreichendes, vollständiges Schmieren aller Getriebeelemente stets sicherzustellen.

Während es häufig um das Kühlen der Antriebs- und/oder Getriebeeinheit geht, kann es in sehr kalten Umgebungsbedingungen, beispielsweise wenn eine Bohrmaschine über Nacht oder über das Wochenende in arktischen Bedingungen stillsteht, auch notwendig oder zumindest hilfreich sein, die Antriebs- und/oder Getriebeeinheit zu beheizen und auf Betriebstemperatur zu bringen, beispielsweise um das Anfahren zu erleichtern und eine vollständige Schmierung auch beim Anlaufen in sehr kalten Temperaturen sicherzustellen.

Der vorliegenden Erfindung liegt daher die Aufgabe zugrunde, eine verbesserte Temperiervorrichtung der eingangs genannten Art, sowie eine verbesserte Antriebs- und/oder Getriebeeinheit und eine verbesserte Tunnelbohrmaschine bereitzustellen, die Nachteile des Standes der Technik vermeiden und letzteren in vorteilhafter Weise weiterbilden. Insbesondere soll ein robustes, auch rauen Baustellenbedingungen standhaltendes Temperieren mittels einer einfach aufgebauten, einfach auszutauschenden Vorrichtung erreicht werden, die gegebenenfalls auch nachträglich an die Antriebs- und/oder Getriebeeinheiten nachgerüstet werden kann, bei denen sich unter bestimmten Betriebsbedingungen Temperaturprobleme ergeben haben.

Erfindungsgemäß wird die genannte Aufgabe durch eine Temperiervorrichtung nach Anspruch 1, eine Getriebe- und/oder Antriebseinheit nach Anspruch 7 sowie durch eine Tunnelbohrmaschine nach Anspruch 10 gelöst. Bevorzugte Ausgestaltungen der Erfindung sind Gegenstand der abhängigen Ansprüche.

Es wird also vorgeschlagen, die Temperiervorrichtung in Form eines eigenständigen, vom Getriebe separaten Wärmetauschermoduls auszubilden, das sandwichartig zwischen zwei Getriebe- und/oder Antriebsabschnitte einfügbar ist, um an der Schnittstelle der beiden Getriebe- und/oder Antriebsabschnitte Wärme abzuziehen oder zuzuführen. Durch den modularen Aufbau von Getriebe- und/oder Antriebseinheit einerseits und Temperiervorrichtung andererseits kann eine Getriebe- und/oder Antriebseinheit beim Auftreten von Temperaturproblemen auch nachträglich in recht einfacher Weise nachgerüstet werden. Erfindungsgemäß bildet das zumindest eine Wärmetauschermodul der Temperiervorrichtung einen Ringkorpus zum sandwichartigen Einpassen zwischen zwei Getriebe- und/oder Antriebsabschnitten, welcher Ringkorpus eine zentrale Durchgangsausnehmung zum Durchführen eines Antriebselements aufweist sowie an gegenüberliegenden Stirnseiten jeweils einen Anschlussflansch zum passgenauen stirnseitigen Anschließen an die zwei Getriebe- und/oder Antriebsabschnitte besitzt. Durch die genannte Durchgangsausnehmung kann beispielsweise eine Antriebswelle oder ein Antriebsrad oder ein anderes Antriebselement hindurchgeführt werden, welches beispielsweise zwei Getriebestufen oder zwei Getriebe- und/oder Antriebsabschnitte kraft- bzw. drehmomentübertragend verbindet. Hierdurch kann das Wärmetauschermodul in einfacher Weise in die Antriebs- bzw. Getriebeeinheit integriert werden, ohne dass die Getriebe- bzw. Antriebseinheit in besonderer Weise adaptiert werden müsste. Die gegenüberliegenden Anschlussflansche des Ringkorpus des Wärmetauschers sind an das Flanschbild der anzuschließenden Getriebe- und/oder Antriebsabschnitte formangepasst, sodass die Getriebe- bzw. Antriebsabschnitte passgenau an die Anschlussflansche ansetzbar und anschließbar sind.

Insbesondere sind die Getriebe- bzw. Antriebsabschnitte, zwischen denen das Wärmetauschermodul sandwichartig eingepasst werden soll, flüssigkeitsdicht an die Anschlussflansche des Wärmetauschers anschließbar, wobei die genannten Getriebe- und/oder Antriebsabschnitte insbesondere mit jeweiligen Gehäuseteilen an den gegenüberliegenden Anschlussflanschen des Wärmetauschermoduls befestigt werden können.

Die gegenüberliegenden Anschlussflansche des Ringkorpus des Wärmetauschermoduls können an die randseitigen Anschlussflansche zweier Gehäuseteile formangepasst und flüssigkeitsdicht daran befestigbar sein, welche Gehäuseteile zusammen ein Getriebegehäuse bilden und/oder separate Gehäusebausteine separater Getriebestufen bilden können.

Gemäß der Erfindung bildet der durchströmbare Flüssigkeitsmantel des Wärmetauschermoduls eine Ringkammer im Inneren des Ringkorpus, die sich um die Durchgangsausnehmung herum erstreckt. Durch eine solche die Durchgangsausnehmung umgebende Ringkammer kann die Kühlflüssigkeit um die Durchgangsausnehmung herumströmen und großflächig die Wandungen des Ringkorpus kühlen und dementsprechend hohe Wärmemengen aufnehmen und abführen.

Um eine robuste und gleichzeitig vom Wärmeübergang her effiziente Ausbildung zu erzielen, kann der genannte Ringkorpus in Weiterbildung der Erfindung einen massiven Außenring, an den die beiden gegenüberliegenden Anschlussflansche ausgebildet sind, einen im Außenring aufgenommenen Innenring sowie zwei vorzugsweise etwa plattenförmige Stirnwände aufweisen, die die genannten Außen- und Innenringe miteinander verbinden und zwischen sich den Flüssigkeitsmantel, insbesondere die genannte Ringkammer begrenzen.

Ein solcher massiver Außenring, der als Vollmaterialkorpus beispielsweise aus einem metallischen Werkstoff ausgebildet sein kann, erhält das Wärmetauschermodul eine ausreichende Robustheit, um die beiden Getriebe- und/oder Antriebsabschnitte stabil miteinander zu verbinden und auch das Wärmetauschermodul selbst gegen die rauen Umgebungsbedingungen auf einer Baustelle zu schützen. Gleichzeitig wird durch die Kastenbauweise mit plattenförmigen Stirnwänden, die die Innen- und Außenringe miteinander verbinden und den Flüssigkeitsmantel begrenzen, ein insgesamt einfacher Aufbau erreicht, wobei die Stirnwände große Wärmeübergangsflächen bilden, die hohe Wärmemengen auf die durchströmende Flüssigkeit übertragen können.

Um eine insgesamt leichte Ausbildung zu erzielen, können die genannten Stirnwände deutlich geringere Wandstärken besitzen als der massive Außenring. Beispielsweise können als Stirnwände dünne Blechplatten vorgesehen werden, die an dem massiven Außenring und an dem Innenring beispielsweise festgeschweißt und/oder festgeklebt und/oder beim Gießen angegossen oder in anderer Weise flüssigkeitsdicht befestigt werden können. In vorteilhafter Weiterbildung der Erfindung kann die Wandstärke der plattenförmigen Stirnwände weniger als ein Drittel oder auch weniger als ein Viertel der Dicke des Außenrings, insbesondere der axialen Erstreckung des Außenrings betragen.

Unabhängig von der Wandstärke der plattenförmigen Stirnwände kann auch der Innenring eine deutlich geringere Wandstärke besitzen als der Außenring. Beispielsweise kann die radial gemessene Stärke des Innenrings weniger als 50% der radial gemessenen Stärke des Außenrings betragen, wobei die Innen- und Außenringe gleiche axiale Erstreckungen besitzen können, insbesondere wenn die plattenförmigen Stirnwände zueinander parallel angeordnet sind.

Insgesamt betrachtet kann der als Ringkorpus ausgebildete Wärmetauscher scheibenförmig ausgebildet sein, insbesondere nach Art einer Salamischeibe, die im Zentrum ein Durchgangsloch aufweist. Eine solche scheibenförmige Ausbildung des Ringkorpus kann sich beispielsweise durch zumindest näherungsweise parallele Stirnseiten auszeichnen. Unabhängig hiervon kann die Außen- und/oder Innenmantelfläche des Ringkorpus, die von der Außenmantelseite des Außenrings und/oder der Innenmantelseite des Innenrings gebildet sein können, eine näherungsweise zylindrische Konturierung besitzen, insbesondere etwa kreiszylindrisch konturiert sein.

Vorteilhafterweise kann der Flüssigkeitsmantel des Wärmetauschermoduls einen Zulauf und einen Ablauf aufweisen, um die durchströmende Temperierflüssigkeit extern, das heißt außerhalb des Wärmetauschermoduls bzw. dessen Flüssigkeitskammer kühlen oder gegebenenfalls auch beheizen zu können. Insbesondere kann das Wärmetauschermodul zumindest einen Zuflussanschluss und einen Ablaufanschluss aufweisen, um einen externen Kühlflüssigkeitskreis der jeweiligen Maschine mit entsprechenden Zufluss- und Abflussleitungen an das Wärmetauschermodul in einfacher Weise anschließen zu können.

Die genannten Zufluss- und Abflussanschlüsse können vorteilhafterweise an dem Außenring des Ringkorpus des Wärmetauschermoduls vorgesehen sein, um die Temperierflüssigkeit durch den Außenring hindurch in die Ringkammer zuführen und aus dieser wieder abführen zu können.

Vorteilhafterweise können der genannte Zulauf und der genannte Ablauf der Ringkammer nebeneinander bzw. im selben Sektor des Ringkorpus des Wärmetauschers vorgesehen und durch einen in der Ringkammer vorgesehenen Trennsteg voneinander getrennt sein, der die Ringkammer in Umfangsrichtung nach Art eines Schlitzrings in zwei Ringbereiche unterteilt. Durch die Anordnung von Zulauf und Ablauf im selben Sektor des Ringkorpus bzw. der Ringkammer wird sichergestellt, dass die Temperierflüssigkeit durch die gesamte Ringkammer umläuft und zirkuliert, wobei der genannte Trennsteg einen Strömungskurzschluss verhindert und dafür sorgt, dass das Fluid im Kreis durch den gesamten Wärmetauscher bzw. die gesamte Ringkammer fließen muss.

Die genannten Zulauf- und Ablaufanschlüsse können flüssigkeitsdichte Kupplungsmittel umfassen, beispielsweise Steckkupplungen oder Schraubkupplungen zum Anschließen von Temperierflüssigkeitsleitungen.

Vorteilhafterweise können der genannte Zulauf und der genannte Ablauf an der Oberseite des Ringkorpus angeordnet sein, beispielsweise bei kurz vor und kurz nach 12 Uhr, um das Temperierfluid sowohl an der Oberseite zuzuführen als auch an der Oberseite abzuführen. Eine solche Anordnung von Zulauf und Ablauf des Temperierfluidkreislaufes an der Oberseite stellt sicher, dass der gesamte Flüssigkeitsmantel, insbesondere die gesamte Ringkammer vom Temperierfluid durchströmt wird. Gemäß der Erfindung sind in der genannten Ringkammer, die vom Temperierfluid durchströmt wird, Turbulenzstege und/oder Verteilderbleche vorgesehen und radial zueinander versetzt angeordnet, sodass die Temperierflüssigkeit mäander- bzw. schlangenförmig hin und her strömen muss, um die Turbulenzstege passieren zu können. Ist die Ringkammer in der genannten Weise durch einen Innenring und einen Außenring begrenzt, können die genannten Turbulenzstege abwechselnd vom Innenring nach außen und vom Außenring nach innen vorspringend angeordnet sein. Die genannten Turbulenzstege können sich dabei über die gesamte Breite bzw. Dicke der Ringkammer erstrecken, das heißt beidseitig an den beiden plattenförmigen Stirnwänden anstehen, sodass jeweils nur eine Durchtrittspassage am radial inneren Ende bzw. am radial äußeren Ende der abwechselnd angeordneten Turbulenzstege verbleibt.

Alternativ oder zusätzlich sind die Turbulenzstege so angeordnet, dass die Kühl- bzw. Wärmeflüssigkeit zwischen den beiden plattenförmigen Stirnwänden, die die Ringkammer stirnseitig begrenzen, hin und her mäandernd strömt. Um dies zu erreichen, belassen die genannten Turbulenzstege jeweils einen Durchtrittsspalt zu einer der beiden Stirnwände, wobei die Turbulenzstege abwechselnd an die eine Stirnwand und die andere Stirnwand anschließen.

Ein mäanderförmiger Strömungspfad, der hin- und hergehend vom Innenring zum Außenring und so weiter verläuft, verlängert jedoch den Strömungspfad durch die Ringkammer hindurch und dementsprechend die Verweilzeit der zirkulierenden Temperierflüssigkeit in der Ringkammer, wodurch ein verbesserter Wärmeübergang erzielt werden kann.

Um eine Vergleichmäßigung der Temperatur der beiden vom Wärmetauschermodul voneinander getrennten Getriebe- und/oder Antriebsabschnitten zu erzielen, kann das Wärmetauschermodul vorteilhafterweise mehrere Durchgangsausnehmungen im Bereich eines äußeren Umfangsabschnitts des Ringkorpus aufweisen. Insbesondere kann der zuvor genannte Außenring mit mehreren Durchgangsbohrungen oder -ausnehmungen versehen sein, um einen Austausch von Getriebeöl bzw. Schmiermittel von dem einen Getriebe- und/oder Antriebsabschnitt zum anderen Getriebe- und/oder Antriebsabschnitt auch im Bereich nahe an der Getriebe- und/oder Antriebsgehäusewandung zu ermöglichen. Ist beispielsweise in einem der Getriebeabschnitte eine Planetengetriebestufe vorgesehen, die am Außenumfang ein Hohlrad aufweist, kann aus der Verzahnung am Hohlraum verdrängtes Schmiermittel über die genannten Durchgangsbohrungen entweichen, sodass das verdrängte Öl beim direkten Kontakt mit dem Wärmetauschermodul Wärme abgibt und eine Überhitzung im Bereich des Hohlrads vermieden wird.

Die genannten Durchgangsbohrungen können entlang des Umfangs des Wärmetauschermoduls verteilt angeordnet sein.

Die genannten Durchgangsausnehmungen können radial innerhalb der gegenüberliegenden Anschlussflansche positioniert sein.

In Weiterbildung der Erfindung können auf beiden Seiten des Wärmetauschermoduls Getriebestufen vorzugsweise in Form von Planetengetriebestufen vorgesehen sein. Die beiden Getriebestufen können kraft- und drehmomentübertragend durch ein Sonnenrad und/oder einen Planetenträgersteg miteinander verbunden sein, das bzw. der sich durch die Durchgangsausnehmung des ringkorpusförmigen Wärmetauschermoduls hindurch erstreckt.

In Weiterbildung der Erfindung kann das zumindest eine Wärmetauschermodul zwischen den beiden ersten, am nächsten beim Antriebsmotor liegenden Getriebestufen angeordnet sein, um die dort auftretende Wärmebelastung abführen zu können. Besonders in den ersten, schnell drehenden Getriebestufen sind die Verlustleistungen und damit die entstehende Wärme am größten, sodass durch Zwischenschaltung des Wärmetauschermoduls zwischen den ersten beiden Getriebestufen die Wärmebelastung besonders effizient reduziert werden kann.

In Weiterbildung der Erfindung können auch mehrere Wärmetauschermodule der genannten Art zwischen mehreren benachbarten Getriebestufenpaaren angeordnet sein, beispielsweise zwischen der ersten und zweiten Getriebestufe und zwischen der zweiten und dritten Getriebestufe. Die genannten Getriebestufen können vorteilhafterweise jeweils als Planetengetriebestufe ausgebildet sein.

Grundsätzlich wäre es auch möglich, ein Wärmetauschermodul zwischen der ersten Getriebestufe und dem daran angeschlossenen Antriebsmotor anzuordnen. Dabei kann einer der Anschlussflansche des Ringkorpus des Wärmetauschermoduls an das Antriebsmotorgehäuse und der andere Antriebsflansch an das Getriebegehäuse angebaut und damit flüssigkeitsdicht verbunden werden.

Die Erfindung wird nachfolgend anhand eines bevorzugten Ausführungsbeispiels und zugehöriger Zeichnungen näher erläutert. In den Zeichnungen zeigen:
- Fig. 1:: eine schematische Darstellung der Antriebs- und Getriebeeinheit einer Tunnelbohrmaschine, wobei das Getriebe mehrere Planetengetriebestufen aufweist und zwischen einer ersten und einer zweiten Getriebestufe ein Wärmetauschermodul nach einer vorteilhaften Ausführung der Erfindung angeordnet ist,
- Fig. 2:: eine perspektivische Darstellung des scheibenförmigen Wärmetauschermoduls der Antriebs- und Getriebeeinheit aus Figur 1, und
- Fig. 3:: eine perspektivische, teilweise freigeschnittene Darstellung des scheibenförmigen Wärmetauschermoduls aus Figur 2, die das Innenleben der durchströmbaren Ringkammer und die daran angeordneten Turbulenzstege zeigt.

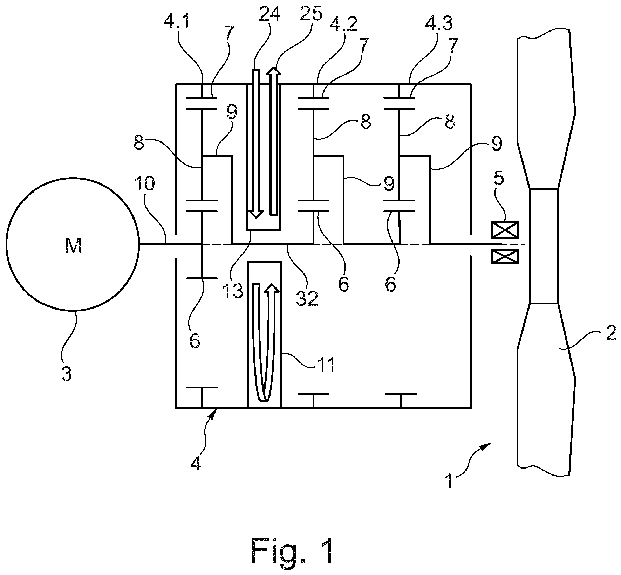

Wie Figur 1 zeigt, kann eine Tunnelbohrmaschine 1 einen rotierend antreibbaren, Fräsrotor ähnlichen Bohrkopf 2 aufweisen, der von einem Antriebsmotor 3 her über eine Getriebeeinheit 4 rotierend angetrieben wird. Der genannte Bohrkopf 2 kann dabei beispielsweise über einen verzahnten Ring von der Getriebeeinheit 4 angetrieben werden, die in an sich bekannter Weise durch ein Bohrkopflager 5 abgestützt sein kann.

Wie Figur 1 zeigt, kann die Getriebeeinheit 4 aus mehreren Getriebestufen aufgebaut sein, die hintereinander geschaltet sind, um die Antriebsdrehzahl des Antriebsmotors 3 in die gewünschte Rotordrehzahl des Bohrkopfs 2 zu übersetzen bzw. zu untersetzen, wobei beispielsweise drei Getriebestufen 4.1, 4.2 und 4.3 vorgesehen sein können.

Die genannten Getriebestufen können dabei Planetenstufen sein, die jeweils ein Sonnenrad 6, ein Hohlrad 7 und damit in Eingriff stehende Planetenräder 8 umfassen können, die auf einem Planetenträger 9 angeordnet sein können. Dabei können benachbarte Planetenstufen jeweils am Sonnenrad und am Steg des Planetenträgers miteinander verbunden sein, vgl. Figur 1.

Die genannten Getriebestufen 4.1, 4.2 und 4.3 können jeweils separat voneinander ausgebildet sein und jeweils zumindest näherungsweise zylindrische Getriebegehäuseteile aufweisen, mit denen sie aneinander setzbar sind, sodass die Getriebeeinheit 4 insgesamt modulartig aus den mehreren Getriebestufen aufgebaut ist, die axial hintereinander angeordnet und aneinander angeschlossen sind.

Die erste Getriebestufe 4.1 kann mit dem Antriebsmotor 3 verbunden sein, wobei beispielsweise eine Motorabtriebswelle 10 mit dem Sonnenrad 4 der ersten Getriebestufe 4.1 drehfest gekoppelt sein kann. Die Abtriebswelle der letzten Getriebestufe 4.3, beispielsweise der Steg des Planetenträgers 9, kann mit der Antriebswelle des Bohrrotors 2 beispielsweise über einen verzahnten Ring gekoppelt sein.

Wie Figur 1 zeigt, kann zwischen zwei benachbarte Getriebestufen, insbesondere zwischen der relativ schnell drehenden ersten und zweiten Getriebestufen 4.1 und 4.2, ein Wärmetauschermodul 11 eingefügt sein, das sandwichartig zwischen den Stirnseiten der benachbarten Getriebestufen 4.1 und 4.2 eingepasst ist. Das genannte Wärmetauschermodul 11 kann dabei die Gehäuseteile der ersten und zweiten Getriebestufen 4.1 und 4.2 starr miteinander verbinden, beispielsweise mittels einer Schraubbolzenverbindung, die die beiden Gehäuseteile 12.1 und 12.2 gegen das Wärmetauschermodul 11 spannt.

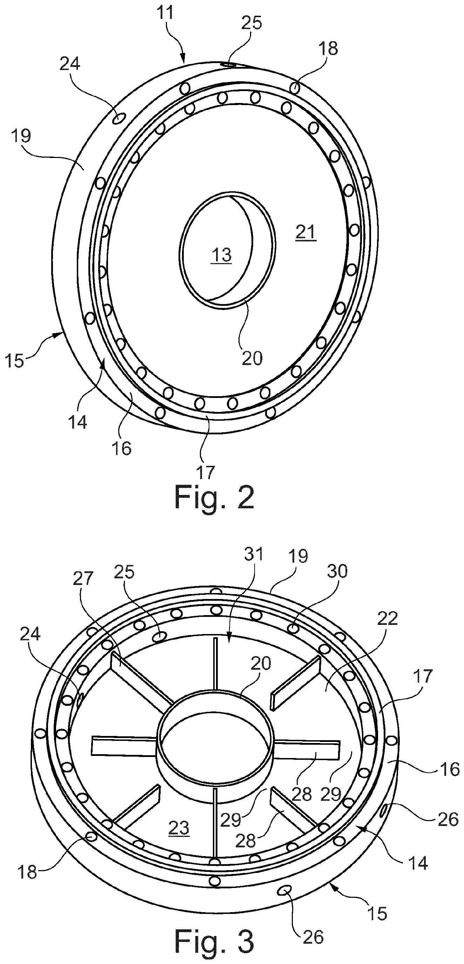

Das genannte Wärmetauschermodul 11 ist in den Figuren 2 und 3 näher gezeigt und kann insgesamt betrachtet scheibenförmig ausgebildet sein. Insbesondere kann das Wärmetauschermodul 11 einen Ringkorpus bilden, der eine Durchgangsausnehmung 13 in einem Mittelabschnitt aufweist und an gegenüberliegenden Stirnseiten jeweils einen Anschlussflansch 14 und 15 aufweist, die hinsichtlich Form und Abmessungen an die Anschlussflansche der beiden Getriebestufen 4.1 und 4.2 angepasst sind, sodass die genannten Getriebestufen 4.1 und 4.2 passgenau auf die beiden Anschlussflansche 14 und 15 des Wärmetauschermoduls 11 gesetzt und damit vorzugsweise spaltfrei, insbesondere flüssigkeitsdicht verbunden werden können. Wie Figur 2 und 3 zeigen, können die genannten Anschlussflansche 14 und 15 beispielsweise jeweils eine ebene, ringförmige Stirnfläche 16 aufweisen, die sich näherungsweise zueinander parallel und/oder in Ebenen senkrecht zur Längsachse der Getriebeeinheit erstrecken können. Die genannten Stirnflächen 16 der Anschlussflansche 14 und 15 können an einem inneren Rand, gegebenenfalls aber auch in einem äußeren Rand, durch einen stirnseitig vorspringenden Ringsteg 17 begrenzt sein, welcher Ringsteg 17 sich in das Gehäuseteil 12.1 bzw. 12.2 des angrenzenden Getriebeabschnitts 4.1 und 4.2 hineinschieben und beispielsweise passgenau an der Innenumfangsfläche des jeweiligen Gehäuseteils anliegen kann. Durch den genannten Ringsteg 17 kann das Wärmetauschermodul 11 in radialer Richtung passgenau an den Gehäuseteilen 12.1 und 12.2 der benachbarten Getriebeabschnitte geführt sein.

Um die Getriebestufen 4.1 und 4.2 starr mit dem Wärmetauschermodul 11 verbinden zu können, können im Wärmetauschermodul 11 im Bereich des Anschlussflansches 14 und 15 Bohrungen 18 vorgesehen sein, um die beiden Gehäuseteile 12.1 und 12.2 mit dem Wärmetauschermodul 11 beispielsweise durch Schraubbolzen miteinander verbinden zu können. Die Schraubbolzen können sich durch die genannten Bohrungen 18 hindurch erstrecken.

Wie Figur 3 zeigt, kann das Wärmetauschermodul 11 vorteilhafterweise einen massiven, aus Vollmaterial gefertigten Außenring 19 umfassen, an dessen Stirnseiten die genannten Anschlussflansche 14 und 15 ausgebildet sein können.

Innerhalb des genannten Außenrings 19 kann das Wärmetauschermodul 11 einen Innenring 20 aufweisen, der die genannte Durchgangsausnehmung 13 des Wärmetauschermoduls 11 begrenzt. Die genannten Außen- und Innenringe 19, 20 können miteinander durch zwei plattenförmige Stirnwände 21, 22 miteinander verbunden sein, die zwischen sich und den genannten Innen- und Außenringen eine Ringkammer 23 begrenzen. Die genannten Stirnwände 21 und 22 können beispielsweise aus einem dünnen Metallblech oder einem anderen stark wärmeleitenden Material bestehen.

Hiervon unabhängig können die genannten Stirnwände 21 und 22 zueinander parallel angeordnet und voneinander um ein Maß beabstandet sein, das näherungsweise der axialen Breite des Innenrings 20 und/oder des Außenrings 19 entspricht.

Die genannten Stirnwände 21 und 22 können im Wesentlichen eben ausgebildet sein, insbesondere zwei ebene Ringscheiben bilden.

Die genannten Stirnwände 21 und 22 sind mit den Außen- und Innenringen 19, 20 flüssigkeitsdicht verbunden, beispielsweise verschweißt und/oder verklebt.

Um Temperierflüssigkeit durch die Ringkammer 23 zirkulieren zu können, besitzt die genannte Ringkammer 23 einen Zulauf 24 und einen Ablauf 25, die sich vorteilhafterweise durch den Außenring 19 hindurch erstrecken können und vorteilhafterweise am Außenumfang des genannten Außenrings 19 münden können.

Wie Figur 2 zeigt, können Zulauf 24 und Ablauf 25 vorteilhafterweise zueinander benachbart und/oder im selben Sektor des Außenrings 19 angeordnet sein, insbesondere auf einer Oberseite des Wärmetauschermoduls 11, wenn dieses bestimmungsgemäß in die Getriebeeinheit 4 integriert ist.

Zusätzlich zu den genannten Zu- und Abläufen 24 und 25 kann an der Unterseite der Ringkammer 23 ein oder mehrere weitere Abläufe 26 vorgesehen sein, um die Kühlflüssigkeit aus der Ringkammer 23 ablassen zu können, wobei sich diese Abläufe 26 vorteilhafterweise auch durch den Außenring 19 hindurch erstrecken können, vgl. Figur 3.

Um sicherzustellen, dass die Temperierflüssigkeit die gesamte Ringkammer 23 durchströmt, kann in der Ringkammer 23 zwischen den an der Oberseite vorgesehenen Zulauf 24 und Ablauf 25 ein Trennsteg 27 vorgesehen sein, der die Ringkammer 23 zwischen Zulauf 24 und Ablauf 25 nach Art eines Schlitzrings unterteilt. Der genannte Trennsteg 27 kann flüssigkeitsdicht sowohl mit dem Außenring 19 und dem Innenring 20 als auch mit den beiden voneinander beabstandeten Stirnwänden 21 und 22 verbunden sein.

Der Zulauf 24 mündet somit auf der einen Seite des Trennstegs 27 in die Ringkammer 23, während der Ablauf 25 auf der gegenüberliegenden Seite des Trennstegs 27 in die Ringkammer 23 mündet.

Um die Temperierflüssigkeit beim Durchströmen der Ringkammer 23 in alle Bereiche der Ringkammer 23 zu leiten, können in der Ringkammer 23 ferner Turbulenzstege 28 vorgesehen sein, die derart angeordnet und ausgebildet sein können, dass das die Ringkammer 23 umlaufend durchströmende Fluid zwischen dem Innenring 20 und dem Außenring 19 hin und her mäandert bzw. entlang der Umlaufrichtung schlangenförmig hin und her strömt. Die genannten Turbulenzstege 28 können abwechselnd radial zueinander versetzt angeordnet sein und abwechselnd einen Spalt zum Innenring 20 und einen Spalt zum Außenring 19 zum Hindurchtreten der Temperierflüssigkeit belassen.

Unabhängig hiervon können sich die genannten Turbulenzstege 28 zwischen den beiden Stirnwänden 21 und 22 erstrecken und diese miteinander verbinden, wobei sich die genannten Turbulenzstege 28 zumindest näherungsweise in radialer Richtung oder von innen nach außen, das heißt in Richtung vom Innenring zum Außenring oder umgekehrt erstrecken können.

Insbesondere können die genannten Turbulenzstege 28 abwechselnd einmal an den Innenring 20 anschließen und einmal an den Außenring 19 anschließen und zum jeweils anderen Ring einen Spalt 29 belassen, durch den die Temperaturflüssigkeit hindurchströmen kann. Die genannten Spalte 29 liegen dabei abwechselnd am Außenring 19 und am Innenring 20, vgl. Figur 3.

Das beschriebene Wärmetauschermodul 11 besitzt signifikante Vorteile. Zum einen ist dies eine kostengünstige und sehr robuste Struktur, die auch für harte Einsatzbedingungen wie beispielsweise bei einer Tunnelbohrmaschine geeignet ist, wobei insbesondere der massive Außenring auch die Stoßbelastungen erträgt, wie sie bei Tunnelbohrmaschinen auftreten.

Dabei macht nicht nur der massive Außenring 19, sondern auch die Kastenbauweise, gemäß der die Stirnwände 21 und 22 durch die Außen- und Innenringe sowie die Turbulenzstege mehrfach miteinander verbunden sind, die Struktur sehr stabil, sodass auch bei starken Vibrationen, Druckspitzen oder anderen äußeren Einflüssen keine Beschädigungen auftreten. Das Wärmetauschermodul ist dabei direkt in die Getriebeeinheit 4 integriert und auch hierdurch vor äußeren Einflüssen zusätzlich geschützt.

Die Anordnung des Wärmetauschermoduls 11 zwischen den ersten beiden Getriebestufen 4.1 und 4.2 bewirkt zudem hervorragende Anströmverhältnisse, wobei eine doppelte Wirkfläche durch die beiden mit dem Getriebeschmierstoff beider Getriebestufen in Kontakt stehenden Stirnwände 21 und 22 entsteht. Die Verlustleistung wird in unmittelbarer Nähe vom Entstehungsort aufgenommen. Besonders in den ersten schnelldrehenden Getriebestufen 4.1 und 4.2 sind die Verlustleistungen und damit die entstehende Wärme am größten.

Durch die radiale, versetzte Anordnung der Turbulenzbleche bzw. -stege 28 wird das ringförmig um die Durchgangsausnehmung 13 umlaufende Temperierfluid mehrere Male umgelenkt, was für eine ganzheitliche Umströmung und maximale Ausnutzung der Wärmeübertragungsfläche durch eine turbulente Strömung in Abhängigkeit der Durchflussmenge sorgt.

Das Wärmetauschermodul 11 ist einfach an bestehende Getriebekonstruktionen zu adaptieren. Dabei kann das Wärmetauschermodul 11 bei Bedarf einfach zwischen den Planetenstufen der Getriebeeinheit 4 platziert werden.

Durch die modulare Ausbildung können auch mehrere Wärmetauschermodule 11 in Reihe hintereinander geschaltet werden und damit die Kühlleistung nahezu beliebig gesteigert werden.

Die axialen Durchgangsbohrungen 30 bzw. -ausnehmungen, die in axialer Richtung durch das Wärmetauschermodul 11 hindurchführen, erlauben auf Höhe der Hohlräder 7 der Planetengetriebestufen aus den dortigen Zahnflanken verdrängtem Öl durch die Durchgangsausnehmungen 30 hindurch zu strömen und eine direkte Kühlwirkung zu erfahren. Die genannten Durchgangsausnehmungen 30 fördern zudem den Ölaustausch bzw. Schmiermittelaustausch in der Getriebeeinheit 4 und sorgen für eine gleichmäßige Durchmischung des Schmierstoffs.

## Patentansprüche

1. Temperiervorrichtung zum Kühlen und/oder Beheizen eines Tunnelbohrer-Getriebes (4), mit zumindest einem Wärmetauschermodul (11), das einen Flüssigkeitsmantel (31) aufweist und einen Ringkorpus zum sandwichartigen Einpassen zwischen zwei benachbarte Antriebs- und/oder Getriebeabschnitte (4.1, 4.2) bildet, welcher Ringkorpus eine zentrale Durchgangsausnehmung (13) zum Hindurchtreten eines drehbaren Antriebs- und/oder Getriebeelements (32) aufweist, sowie an gegenüberliegenden Stirnseiten jeweils einen Anschlussflansch (14, 15) zum passgenauen stirnseitigen Anschließen an zwei benachbarte Getriebe- und/oder Antriebsabschnitte (4.1, 4.2) besitzt, wobei der Flüssigkeitsmantel (31) eine Ringkammer (23) im Inneren des Ringkorpus bildet, die um die Durchgangsausnehmung (13) herum verläuft, wobei in der Ringkammer (23) Turbulenzstege (28) vorgesehen sind, **dadurch gekennzeichnet, dass**
- die Turbulenzstege (28) radial zueinander versetzt sind und abwechselnd vom Innenumfang der Ringkammer (23) nach Außen und vom Außenumfang der Ringkammer (23) nach Innen vorspringen und abwechselnd am Innenumfang und am Außenumfang der Ringkammer (23) einen Durchtrittsspalt (29) für das zu zirkulierende Temperierfluid begrenzen, sodass ein mäanderförmiger Strömungspfad hin- und hergehend vom Innenumfang zum Außenumfang der Ringkammer verläuft, und/oder
- die Turbulenzstege (28) jeweils einen weiteren Durchtrittsspalt zu einer von zwei Stirnwänden (21, 22), die die Ringkammer (23) stirnseitig begrenzen, belassen, wobei die Turbulenzstege (28) abwechselnd an die eine Stirnwand (21) und die andere Stirnwand (22) anschließen, sodass ein mäanderförmiger Strömungspfad hin- und hergehend von der einen Stirnwand (21) zur anderen Stirnwand (22) verläuft.

2. Temperiervorrichtung nach dem vorhergehenden Anspruch, wobei die Ringkammer zumindest einen Zulauf (24) und zumindest einen Ablauf (25) besitzt, die zueinander benachbart und/oder in einem Sektor der Ringkammer (23) angeordnet und durch einen Trennsteg (27) voneinander getrennt sind, welcher Trennsteg die Ringkammer (23) in Umfangsrichtung nach Art eines Schlitzrings in zwei Ringkammerabschnitte unterteilt.

3. Temperiervorrichtung nach dem vorhergehenden Anspruch, wobei der Zulauf (24) und der Ablauf (25) an der Oberseite des Wärmetauschermoduls (11) angeordnet sind.

4. Temperiervorrichtung nach einem der vorhergehenden Ansprüche, wobei der Ringkorpus des Wärmetauschermoduls (11) einen massiven Außenring (19), an dem die beiden gegenüberliegenden Anschlussflansche (14, 15) ausgebildet sind, einen innerhalb des Außenrings (19) angeordneten Innenring (20) sowie zwei vorzugsweise ebene, plattenförmige Stirnwände (21, 22) aufweist, die die Außen- und Innenringe (19, 20) miteinander verbinden und zwischen sich den Flüssigkeitsmantel (21) begrenzen.

5. Temperiervorrichtung nach dem vorhergehenden Anspruch, wobei die Stirnwände (21, 22) eine kleinere Wandstärke als der Außenring (19) besitzen, wobei eine Wandstärke der Stirnwände (21, 22) vorzugsweise weniger als ein Drittel oder weniger als ein Viertel der Wandstärke des Außenrings (19) beträgt.

6. Temperiervorrichtung nach einem der beiden vorhergehenden Ansprüche, wobei der Außenring (19) innerhalb der Anschlussflansche (14, 15) axiale Durchgangsausnehmungen (30) zum Strömungsverbinden der beiden Getriebe- und/oder Antriebsabschnitte (4.1, 4.2), zwischen denen das Wärmetauschermodul (11) sandwichartig angeordnet ist, aufweist.

7. Getriebe- und/oder Antriebseinheit umfassend zumindest zwei Getriebe- und/oder Antriebsabschnitte (4.1, 4.2), zwischen denen eine Temperiervorrichtung, die gemäß einem der vorhergehenden Ansprüche ausgebildet ist, angeordnet ist, wobei die zwei genannten Getriebe- und/oder Antriebsabschnitte (4.1, 4.2) an den gegenüberliegenden Anschlussflanschen (14, 15) des Wärmetauschermoduls (11) befestigt und durch das Wärmetauschermodul (11) miteinander verbunden sind, wobei sich ein Getriebe- und/oder Antriebselement (32), das die zwei genannten Getriebe- und/oder Antriebsabschnitte (4.1, 4.2) kraft- und/oder drehmomentübertragend miteinander verbindet, durch die Durchgangsausnehmung (13) in dem Wärmetauschermodul (11) hindurch erstreckt.

8. Getriebe- und/oder Antriebseinheit nach dem vorhergehenden Anspruch, wobei die zwei an das Wärmetauschermodul (11) angeschlossenen Getriebeabschnitte jeweils eine Planetengetriebestufe umfassen, wobei das sich durch die Durchgangsausnehmung (13) des Wärmetauschermoduls (11) hindurch erstreckende Antriebselement ein Sonnenrad (6) der einen Planetengetriebestufe mit dem Planetenträger (9) der anderen Planetengetriebestufe drehfest verbindet.

9. Getriebe- und/oder Antriebseinheit nach einem der beiden vorhergehenden Ansprüche, wobei das zumindest eine Wärmetauschermodul (11) zwischen einer ersten und einer zweiten Getriebestufe angeordnet ist, welche ersten und zweiten Getriebestufen hintereinander geschaltet an einen Antriebsmotor (3) anschließen und/oder die beiden Getriebestufen mit den höchsten Drehzahlen sind.

10. Tunnelbohrmaschine mit einem Bohrkopf (2), der von einem Antriebsmotor (3) über eine Getriebeeinheit (4) antreibbar ist, wobei in die Getriebeeinheit (4) eine Temperiervorrichtung, die gemäß einem der Ansprüche 1 bis 10 ausgebildet ist, integriert ist.

## Claims

1. Temperature control device for cooling and/or heating a transmission unit (4) of a tunnel boring machine, having at least one heat exchanger module (11) which comprises a liquid jacket (31) and forms a ring body for fitting in a sandwich-like manner between two adjacent drive and/or transmission sections (4.1, 4.2), which ring body comprises a central through-cutout (13) for the guiding of a rotatable drive and/or transmission element (32), and on opposite end faces in each case a connection flange (14, 15) for precision-fit end-face connection to the two transmission and/or drive sections (4.1, 4.2), wherein the liquid jacket (31) forms a ring chamber (23) inside the ring body extending around the through-cutout (13), wherein turbulence fins (28) are provided in the ring chamber (23),
**characterized in that**
- the turbulence fins (28) are radially offset to one another and alternately project outwardly from the inner circumference of the ring chamber (23) and inwardly from the outer circumference of the ring chamber (23), and alternately delimit at the inner circumference and at the outer circumference of the ring chamber (23) a passage gap (29) for the temperature control liquid to be circulated, so that a meandering flow path extends back and forth from the inner circumference to the outer circumference of the ring chamber, and/or
- the turbulence fins (28) respectively delimit a further passage gap to one of two end walls (21, 22), which delimit the ring chamber (23) at the face side, wherein the turbulence fins (28) alternately connect to one end wall (21) and the other end wall (22), so that a meandering flow path extends back and forth from one end wall (21) to the other end wall (22).

2. Temperature control device according to the preceding claim, wherein the ring chamber comprises at least one inlet (24) and at least one outlet (25), which are arranged adjacent to one another and/or in a sector of the ring chamber (23) and are separated from one another by a separation plate (27), which separation plate divides the ring chamber (23) in the circumferential direction into two ring chamber sections in the manner of a slit ring.

3. Temperature control device according to the preceding claim, wherein the inlet (24) and the outlet (25) are arranged on the upper side of the heat exchanger module (11).

4. Temperature control device according to any of the preceding claims, wherein the ring body of the heat exchanger module (11) comprises a solid outer ring (19), on which the two opposing connection flanges (14, 15) are formed, an inner ring (20) arranged inside the outer ring (19), and two preferably flat, plate-shaped end walls (21, 22) which connect the outer and inner rings (19, 20) to one another and delimit the liquid jacket (21) between them.

5. Temperature control device according to the preceding claim, wherein the end walls (21, 22) have a smaller wall thickness than the outer ring (19), wherein a wall thickness of the end walls (21, 22) is preferably less than one third or less than one quarter of the wall thickness of the outer ring (19).

6. Temperature control device according to any of the preceding claims, wherein the outer ring (19) comprises axial through-cutouts (30) inside the connecting flanges (14, 15) for flow connection of the two transmission and/or drive sections (4.1, 4.2), between which the heat exchanger module (11) is arranged in a sandwich-like manner.

7. Transmission and/or drive unit, comprising at least two transmission and/or drive sections (4.1, 4.2) between which a temperature control device formed according to any of the preceding claims is arranged, wherein the two transmission and/or drive sections (4.1, 4.2) are attached to the opposite connection flanges (14, 15) of the heat exchanger module (11) and are connected to one another by the heat exchanger module (11), wherein a transmission and/or drive element (32), which connects the two said transmission and/or drive sections (4.1, 4.2) to one another in a force-transmitting and/or torque-transmitting manner, extends through the through-cutout (13) in the heat exchanger module (11).

8. Transmission and/or drive unit according to the preceding claim, wherein the two transmission sections connected to the heat exchanger module (11) each comprise a planetary gear stage, wherein the drive element extending through the through-cutout (13) of the heat exchanger module (11) connects a sun gear (6) of one planetary gear stage to the planet carrier (9) of the other planetary gear stage in a rotationally fixed manner.

9. Transmission and/or drive unit according to one of the two of the preceding claims, wherein the at least one heat exchanger module (11) is arranged between a first and a second gear stage, which first and second gear stages are connected in series to a drive motor (3) and/or are the two gear stages with the highest speeds.

10. Tunnel boring machine with a drill head (2) which can be driven by a drive motor (3) via a transmission unit (4), wherein a temperature control device which is configured according to any of the claims 1 to 6 is integrated into the transmission unit (4).

## Revendications

1. Dispositif de thermorégulation pour refroidir et/ou chauffer une transmission de foreuse de tunnel (4), avec au moins un module échangeur de chaleur (11), qui présente une enveloppe de liquide (31) et forme un corps annulaire destiné à être ajusté à la manière d'un sandwich entre deux sections d'entraînement et/ou de transmission adjacentes (4.1, 4.2), lequel corps annulaire présente un évidement de passage central (13) pour faire passer un élément d'entraînement et/ou de transmission rotatif (32) et qui possède, sur des côtés frontaux opposés, respectivement une bride de raccordement (14, 15) destinée à être raccordée côté frontal avec ajustement précis à deux sections de transmission et/ou d'entraînement adjacentes (4.1, 4.2), dans lequel l'enveloppe de liquide (31) forme une chambre annulaire (23) à l'intérieur du corps annulaire, qui s'étend tout autour de l'évidement de passage (13), dans lequel des nervures de turbulence (28) sont prévues dans la chambre annulaire (23),
**caractérisé en ce que**
- les nervures de turbulence (28) sont décalées radialement les unes par rapport aux autres et font saillie en alternance vers l'extérieur depuis la périphérie intérieure de la chambre annulaire (23) et vers l'intérieur depuis la périphérie extérieure de la chambre annulaire (23) et délimitent en alternance sur la périphérie intérieure et sur la périphérie extérieure de la chambre annulaire (23) une fente de passage (29) pour le fluide de thermorégulation à faire circuler si bien qu'un chemin d'écoulement sinueux s'étend en va-et-vient depuis la périphérie intérieure vers la périphérie extérieure de la chambre annulaire, et/ou
- les nervures de turbulence (28) laissent respectivement une autre fente de passage vers une des deux parois frontales (21, 22), qui délimitent côté frontal la chambre annulaire (23), dans lequel les nervures de turbulence (28) se raccordent en alternance à une paroi frontale (21) et à l'autre paroi frontale (22) si bien qu'un chemin d'écoulement sinueux s'étend en va-et-vient depuis une paroi frontale (21) vers l'autre paroi frontale (22).

2. Dispositif de thermorégulation selon la revendication précédente, dans lequel la chambre annulaire possède au moins une arrivée (24) et au moins une sortie (25), qui sont adjacentes l'une par rapport à l'autre et/ou sont disposées dans un secteur de la chambre annulaire (23) et sont séparées l'une de l'autre par une nervure de séparation (27), laquelle nervure de séparation divise la chambre annulaire (23) dans la direction périphérique à la manière d'une bague fendue en deux sections de chambre annulaire.

3. Dispositif de thermorégulation selon la revendication précédente, dans lequel l'arrivée (24) et la sortie (25) sont disposées sur le côté supérieur du module échangeur de chaleur (11).

4. Dispositif de thermorégulation selon l'une quelconque des revendications précédentes, dans lequel le corps annulaire du module échangeur de chaleur (11) présente une bague extérieure massive (19), sur laquelle les deux brides de raccordement (14, 15) opposées sont réalisées, une bague intérieure (20) disposée à l'intérieur de la bague extérieure (19), ainsi que deux parois frontales (21, 22) en forme de panneau de préférence planes, qui relient entre elles les bagues extérieure et intérieure (19, 20) et délimitent entre elles l'enveloppe de liquide (21).

5. Dispositif de thermorégulation selon la revendication précédente, dans lequel les parois frontales (21, 22) possèdent une épaisseur de paroi inférieure à celle de la bague extérieure (19), dans lequel une épaisseur de paroi des parois frontales (21, 22) est égale à moins d'un tiers ou à moins d'un quart de l'épaisseur de paroi de la bague extérieure (19).

6. Dispositif de thermorégulation selon l'une quelconque des deux revendications précédentes, dans lequel la bague extérieure (19) présente à l'intérieur des brides de raccordement (14, 15) des évidements de passage (30) axiaux pour connecter en écoulement les deux sections de transmission et/ou d'entraînement (4.1, 4.2), entre lesquelles le module échangeur de chaleur (11) est disposé à la manière d'un sandwich.

7. Unité de transmission et/ou d'entraînement comprenant au moins deux sections de transmission et/ou d'entraînement (4.1, 4.2), entre lesquelles est disposé un dispositif de thermorégulation, qui est réalisé selon l'une quelconque des revendications précédentes, dans laquelle lesdites deux sections de transmission et/ou d'entraînement (4.1, 4.2) sont fixées sur les brides de raccordement (14, 15) opposées du module échangeur de chaleur (11) et sont reliées entre elles par le module échangeur de chaleur (11), dans lequel un élément de transmission et/ou d'entraînement (32), qui relie entre elles à force et/ou par transmission de couple de rotation lesdites deux sections de transmission et/ou d'entraînement (4.1, 4.2), s'étend à travers l'évidement de passage (13) dans le module échangeur de chaleur (11) de part en part.

8. Unité de transmission et/ou d'entraînement selon la revendication précédente, dans laquelle les deux sections de transmission raccordées au module échangeur de chaleur (11) comprennent respectivement un étage d'engrenage planétaire, dans laquelle l'élément d'entraînement s'étendant à travers l'évidement de passage (13) du module échangeur de chaleur (11) de part en part relie de manière solidaire en rotation une roue solaire (6) d'un étage d'engrenage planétaire au porte-satellites (9) de l'autre étage d'engrenage planétaire.

9. Unité de transmission et/ou d'entraînement selon l'une quelconque des revendications précédentes, dans laquelle l'au moins un module échangeur de chaleur (11) est disposé entre un premier et un deuxième étage de transmission, lesquels premier et deuxième étages de transmission se raccordent montés l'un après l'autre à un moteur d'entraînement (3) et/ou sont les deux étages de transmission avec les vitesses de rotation les plus élevées.

10. Machine de forage de tunnel avec une tête de forage (2), qui peut être entraînée par un moteur d'entraînement (3) par l'intermédiaire d'une unité de transmission (4), dans laquelle un dispositif de thermorégulation qui est réalisé selon l'une quelconque des revendications 1 à 6 est intégré dans l'unité de transmission (4).
